Europäisches Patentamt

(19) European Patent Office

Office européen des brevets

(11) EP 0 557 153 B1

# (12) FASCICULE DE BREVET EUROPEEN

(45) Date de publication et mention
de la délivrance du brevet:
**02.05.1997 Bulletin 1997/18**

(51) Int. Cl.⁶: **C01F 7/00**

(21) Numéro de dépôt: **93400295.7**

(22) Date de dépôt: **05.02.1993**

(54) **Nouveaux polychlorosulfates d'aluminium, procédé pour leur préparation et leurs applications**

Aluminiumpolychlorosulfate, Verfahren zu ihrer Herstellung und ihre Anwendung

Aluminiumpolychlorosulphates, process for their preparation and their uses

(84) Etats contractants désignés:
**AT BE CH DE DK ES FR GB GR IE IT LI LU NL PT SE**

(30) Priorité: **18.02.1992 FR 9201807**

(43) Date de publication de la demande:
**25.08.1993 Bulletin 1993/34**

(73) Titulaire: **ELF ATOCHEM S.A.**
**92800 Puteaux (FR)**

(72) Inventeurs:
 • **Murphy, John David,**
  **F-69001 Lyon (FR)**
 • **Schuffenecker, Robert,**
  **F-69110 Ste Foy les Lyon (FR)**
 • **Suty, Hervé,**
  **F-94500 Champigny sur Marne (FR)**

(74) Mandataire: **Hirsch, Marc-Roger et al**
 **Cabinet Hirsch**
 **34 rue de Bassano**
 **75008 Paris (FR)**

(56) Documents cités:
 **EP-A- 0 327 419**     **BE-A- 790 138**
 **FR-A- 2 317 227**     **FR-A- 2 534 897**

 • **PATENT ABSTRACTS OF JAPAN vol. 2, no. 46 (C-9)28 Mars 1978**
 • **PATENT ABSTRACTS OF JAPAN vol. 2, no. 15 (C-2)31 Janvier 1978**

EP 0 557 153 B1

**Description**

La présente invention a pour objet des polychlorosulfates d'aluminium de haute basicité et leur procédé de préparation, ainsi que l'application de ces polychlorosulfates d'aluminium au traitement des eaux potables, des effluents aqueux et dans l'industrie papetière.

Les polychlorosulfates d'aluminium sont largement utilisés dans l'industrie, notamment l'industrie papetière et le traitement des eaux résiduelles et potables, grâce à leur qualité de coagulation et de floculation élevée. En fait, les performances et les applications de ces polychlorosulfates d'aluminium sont liées à leurs caractéristiques principales. Une basicité élevée est requise dans le traitement des eaux potables; une teneur en sulfate élevée est requise pour une floculation efficace; les composés devant pour toutes les applications être stables.

Des polychlorosulfates d'aluminium de formule $Al_nOH_m(SO_4)_kCl_{3n-m-2k}$ présentent une basicité relativement élevée, pouvant atteindre 65%. Ces produits, décrits dans FR-A-2 584 699, présentent cependant l'inconvénient majeur de la sous-production, au cours de leur fabrication, de gypse dont le rejet pose des problèmes d'environnement.

JP-52 113384 décrit et revendique un procédé de fabrication de polychlorosulfate d'aluminium de basicité élevée par addition, à une température inférieure à 60°C, d'un agent alcalin tel que $CaCO_3$, $NaHCO_3$, $Na_2CO_3$, $Mg(OH)_2$ ou MgO à une solution d'un composé de polyaluminium préalablement obtenu par réaction d'un polychlorosulfate d'aluminium de basicité faible avec $CaCO_3$, conduisant à la production de gypse qui est séparé, la basicité de ce composé de polyaluminium intermédiaire étant de 50.

JP-53 001699 décrit et revendique un procédé de fabrication de polychlorosulfate d'aluminium de basicité élevée dans lequel on fait réagir dans un premier temps un polychlorosulfate d'aluminium de basicité moyenne avec une quantité équimolaire de $CaCO_3$ par rapport au sulfate conduisant à la production de gypse qui est séparé, puis dans un second temps on fait réagir le produit de l'étape précédente dont la basicité est comprise entre 55 et 58 avec un composé choisi dans le groupe consistant en: $CaCO_3$, $NaHCO_3$, $Na_2CO_3$, $Mg(OH)_2$ et MgO.

Cependant, la basicité des polychlorosulfates d'aluminium selon les deux documents japonais précités est inférieure à 70% et donc dans certaines applications n'est pas suffisamment élevée. De plus, la stabilité de ces composés est faible. Un inconvénient majeur que présentent ces composés est la production de gypse dont le rejet pose des problèmes d'environnement, comme il a déjà été mentionné ci-avant.

FR-A-2 317 227 décrit et revendique un procédé de fabrication à une température inférieure à 50°C d'hydroxychlorures d'aluminium de formule générale:

$$Al(OH)_aCl_bY_{c/z1}M_{d/z2}$$

dans laquelle:

Y représente un anion de valence z1, typiquement $SO_4^{2-}$ ;
M est un cation de valence z2, tel que l'ammonium, un métal alcalin ou alcalino-terreux; et
$1,2 < a < 1,7$;
$0 < c \leq 0,6$;
$0,2 < d < 1,7$; et
$a + b + c = 3 + d$ .

Cependant, il est mentionné dans ce brevet que, si l'utilisation de métaux alcalino-terreux est possible, il existe des risques d'apparition de précipités, ce qui conduit à une stabilité faible.

Aucun des documents mentionnés ne décrit ni ne suggère la présente invention qui fournit des polychlorosulfates d'aluminium possédant des caractéristiques améliorées, notamment de floculation et d'élimination de la turbidité, de teneur résiduelle en aluminium, de stabilité, et ne donnant pas lieu à des rejets lors de leur fabrication, et ceci de façon simultanée.

En fait, la présente invention fournit un polychlorosulfate d'aluminium à haute basicité, soluble dans l'eau, présentant au moins 1% en mole d'aluminium sous forme $Al_{13}$, pour une concentration en Al de 0,01M, et présentant la formule:

$$Al(OH)_aCl_b(SO_4)_cM_dN_e$$

dans laquelle:

M représente un métal alcalino-terreux;
N représente un métal alcalin;
a, b, c, d et e sont des nombres tels que:
$1,95 < a < 2,4$; $0 < c < 0,15$; $0 < d < 0,16$;

2

$$0 < e < 1,7; \ a + b + 2c = 3 + 2d + e \ .$$

Les nombres a, b, c, d et e sont tels que sont obtenues les propriétés améliorées, telles que basicité, stabilité que possèdent les nouveaux polychlorosulfates selon la présente invention.

Le métal alcalino-terreux M est, par exemple, le magnésium ou le calcium. De préférence, M est le calcium. Le métal alcalin N est par exemple le sodium ou le potassium. De préférence, N est le sodium.

Selon un mode de réalisation préféré, le polychlorosulfate d'aluminium selon la présente invention a pour formule:

$$Al(OH)_a Cl_b (SO_4)_c M_d N_e$$

dans laquelle:

$$2,05 < a < 2,25; 0,04 < c < 0,06;$$
$$0,1 < d < 0,13; 0,4 < e < 0,8.$$

La basicité des produits selon la présente invention est très élevée; selon un mode de réalisation, elle est supérieure à 67%, de préférence supérieure à 72%.

La forme particulière de l'aluminium $Al_{13}$ est notable par RMN de l'$Al^{27}$, dans les conditions données dans les exemples. Pouillot et al., janvier 1992, conférence à Hong-Kong, "High Basicity Polymeric Aluminium Salts for Drinking Water Production", décrit la présence de cette forme particulière d'$Al_{13}$, et établit un lien entre la présence d'$Al_{13}$ et les propriétés élevées du produit. cependant, il n'y a aucune mention des présents produits, ni même de valeurs quantitatives concernant cet $Al_{13}$.

Selon un mode de réalisation préféré, la teneur en Al sous forme $Al_{13}$ est supérieure à 1% en mole pour une concentration en Al de 0,06M et/ou supérieure à 3% en mole pour une concentration en Al de 0,01M.

La présence d'$Al_{13}$ confère aux polychlorosulfates d'aluminium selon la présente invention des propriétés améliorées, notamment une stabilité à 45°C d'au moins 1 mois.

En fait, la préparation de ces nouveaux polychlorosulfates d'aluminium est rendue possible par le présent procédé, autre objet de la présente invention.

Ainsi, l'invention a pour objet un procédé de préparation d'un polychlorosulfate d'aluminium à haute basicité, soluble dans l'eau, présentant au moins 1% en mole d'aluminium sous forme $Al_{13}$, pour une concentration en Al de 0,01M, et présentant la formule:

$$Al(OH)_a Cl_b (SO_4)_c M_d N_e$$

dans laquelle:

| M | représente un métal alcalino-terreux; |
|---|---|
| N | représente un métal alcalin; |
| a, b, c, d et e | sont des nombres tels que: |
| | $1,95 < a < 2,4; 0 < c < 0,15; \ 0 < d < 0,16; \ 0 < e < 1,7;$ |
| | $a + b + 2c = 3 + 2d + e \ ;$ |

comprenant la réaction, à une température de 50 à 70°C, d'un composé d'un métal alcalino-terreux M, d'un composé d'un métal alcalin N avec un polychlorosulfate d'aluminium de formule:

$$Al(OH)_{a'} Cl_{b'} (SO_4)_{c'}$$

dans laquelle:
$$1 < a' < 1,95; \ 0 < c' < 0,15;$$
$$a' + b' + 2 c' = 3 \ ;$$
en les proportions suivantes, calculées en équivalents moléculaires:

$$0 < M/Al < 0,16 \ et \ 0 < N/Al < 1,7$$

Selon un mode préféré de mise en oeuvre du procédé, la température est comprise entre 60 et 65°C.

Le terme "composé basique d'un métal alcalino-terreux" désigne tout dérivé à caractère basique dudit métal, en particulier oxyde, hydroxyde et (bi)carbonate.

De préférence, le composé de métal alcalino-terreux est un composé de calcium, avantageusement $Ca(OH)_2$ et/ou $CaCO_3$. Le terme "composé basique d'un métal alcalin" désigne tout dérivé à caractère basique dudit métal, en particulier oxyde, hydroxyde et (bi)carbonate.

De préférence, le composé de métal alcalin est un composé de sodium, avantageusement $Na_2CO_3$.

Le terme "calculé en équivalent moléculaire" signifie que les rapports sont exprimés en moles, ramenés à la forme métal.

Selon un mode de réalisation préféré, les nombres a', c' et les proportions M/Al et N/Al sont compris respectivement dans les intervalles:

$$1,1 < a' < 1,4; \ 0,04 < c' < 0,06$$

$$0,1 < M/Al < 0,13; \ 0,4 < N/Al < 0,8$$

Le polychlorosulfate d'aluminium de départ est n'importe quel polychlorosulfate d'aluminium répondant à la formule $Al(OH)_{a'}Cl_{b'}(SO_4)_{c'}$ précitée, c'est-à-dire d'une basicité faible à moyenne, typiquement de l'ordre de 40 à 50%

Un polychlorosulfate d'aluminium préféré est celui obtenu par le procédé consistant à faire réagir du chlorure basique d'aluminium sur du sulfate basique d'aluminium, portés préalablement à chaud, à une température comprise entre 80 et 120°C, les proportions relatives des constituants étant choisies de façon à obtenir le polychlorosulfate d'aluminium de formule $Al(OH)_{a'}Cl_{b'}(SO_4)_{c'}$ précitée. Ce procédé est décrit en détail dans FR-A-2 534 897, dont le contenu est incorporé à la présente par référence.

Un autre polychlorosulfate d'aluminium préféré est celui obtenu par le procédé consistant à faire réagir du chlorure basique d'aluminium avec de l'acide sulfurique, à une température comprise entre 60 et 120°C, les proportions relatives des constituants étant choisies de façon à obtenir le polychlorosulfate d'aluminium de formule $Al(OH)_{a'}Cl_{b'}(SO_4)_{c'}$ précitée. Ce procédé est décrit en détail dans FR-A-2 036 685, dont le contenu est incorporé à la présente par référence.

Les polychlorosulfates d'aluminium selon la présente invention sont utiles dans des nombreux domaines, tels que ceux cités en préambule de la présente demande. Ainsi, la présente invention a-t-elle aussi pour objet les applications des présents polychlorosulfates d'aluminium, et notamment au traitement des eaux potables et effluents aqueux, ainsi que dans l'industrie papetière.

En fait, dans les applications courantes, il se posait plusieurs problèmes, résultant du procédé de fabrication. L'élimination de la turbidité, liée directement à la coagulation-floculation, nécessite une teneur en sulfate élevée, et une température de basification faible, typiquement inférieure à 40°C. Le traitement d'eaux potables nécessite une teneur résiduelle en aluminium faible, ce qui implique une basicité élevée et par là une température de basification élevée, typiquement supérieure à 70°C. Il y a donc une incompatibilité entre les deux caractéristiques d'application en ce qui concerne l'influence de la température. De plus, un polychlorosulfate d'aluminium ayant une teneur en sulfate élevée et obtenu à une température de basification élevée est sujet à une gélification ou précipitation; il ne présente donc pas les caractéristiques de stabilité dans le temps que requiert le stockage. L'amélioration d'une caractéristique se faisait jusqu'à maintenant au détriment d'autres caractéristiques. La présente invention permet donc de pallier les inconvénients selon l'art antérieur et offre de nombreux avantages qui apparaissent à la lecture de la description et des exemples.

La présente invention est maintenant décrite plus en détail par les exemples suivants, donnés à titre illustratif et nullement limitatif.

EXEMPLE 1

a) Préparation du polychlorosulfate d'aluminium de départ

La synthèse du chlorure d'aluminium basique est effectuée dans un autoclave de 4 litres, agité à une vitesse contrôlée et chauffé par circulation d'un fluide caloporteur dans la double enveloppe. Le réacteur est en outre muni d'un manomètre, d'une gaine thermométrique, d'un évent et d'un disque de rupture. Les conditions opératoires de la réaction et de la basification sont une température de 140°C et une pression de 2 bars, pendant des durées respectivement de 4 et 3,5 heures. La synthèse du sulfate d'aluminium basique est effectuée dans un réacteur en verre de 1 litre, agité à une vitesse contrôlée et chauffé par circulation d'un fluide caloporteur dans la double enveloppe; le réacteur est muni d'une gaine thermométrique, d'un évent réfrigéré et d'un point d'introduction des réactifs. L'étape de réaction est effectuée à une température d'environ 110°C et sous pression atmosphérique, pendant une durée de 2 heures.

Les deux suspensions précédentes sont mélangées dans un réacteur en verre de 5 litres, sous agitation pendant 20 minutes à 100°C. La suspension résultante est filtrée sous une pression de 3 bars pour enlever l'excès d'alumine.

Le polychlorosulfate d'aluminium obtenu a pour formule:

$$Al(OH)_{1,23}Cl_{1,65}(SO_4)_{0,06}$$

de basicité B d'environ 40%.

b) Préparation du polychlorosulfate d'aluminium de haute basicité selon l'invention

1 kg du polychlorosulfate d'aluminium préparé précédemment avec une teneur en alumine de 10,5% est placé dans un réacteur de 1 litre, à double enveloppe, muni d'une contrepale et d'un agitateur. La température du réacteur est contrôlée par circulation de l'eau d'un bain thermostatique dans la double enveloppe. La température est portée à 60°C. 20 g de $Ca(OH)_2$ sont ajoutés et la suspension est agitée pendant 30 minutes.

Ensuite, 85 g de $Na_2CO_3$ sont ajoutés lentement sur une période de 30 minutes. La suspension est donc agitée pendant 1 heure au total, à une température de 60°C. La suspension contenant peu de solide est finalement filtrée. Sa composition finale est, en poids:

| | | |
|---|---|---|
| $Al_2O_3$ | env. | 9,69% |
| Ca | env. | 1,03% |
| Na | env. | 3,40% |
| Cl | env. | 11,41% |
| $SO_4$ | env. | 1,15% |
| basicité | env. | 74,38% |

c'est-à-dire que le polychlorosulfate d'aluminium final a pour formule:

$$Al(OH)_{2,23}Cl_{1,69}(SO_4)_{0,06}Ca_{0,13}Na_{0,78}$$

EXEMPLE 2

La procédure de l'exemple 1 est répétée, à l'exception du fait que la température de mélange des composés des métaux alcalino-terreux et alcalin et du polychlorosulfate d'aluminium est de 70°C.

Le produit final a une composition, en poids, de:

| | | |
|---|---|---|
| $Al_2O_3$ | env. | 9,64% |
| Ca | env. | 1,0% |
| Na | env. | 3,3% |
| Cl | env. | 11,47% |
| $SO_4$ | env. | 1,12% |
| basicité | env. | 73,04% |

c'est-à-dire que le polychlorosulfate d'aluminium final a pour formule:

$$Al(OH)_{2,19}Cl_{1,71}(SO_4)_{0,06}Ca_{0,13}Na_{0,76}$$

EXEMPLE 3 (comparatif)

La procédure de l'exemple 2 est répétée, à l'exception du fait que 50 g de $Na_2CO_3$ sont introduits au lieu de 85 g.

Le produit final a une composition, en poids, de:

| $Al_2O_3$ | env. | 10,0% |
|---|---|---|
| Ca | env. | 1,06% |
| Na | env. | 1,42% |
| Cl | env. | 11,47% |
| $SO_4$ | env. | 1,15% |
| basicité | env. | 60,7% |

c'est-à-dire que le polychlorosulfate d'aluminium final a pour formule:

$$Al(OH)_{1,80}Cl_{1,65}(SO_4)_{0,06}Ca_{0,13}Na_{0,31}$$

EXEMPLE 4

La procédure de l'exemple 1 est répétée, à l'exception du fait que 27 g de $CaCO_3$ sont ajoutés au lieu de 20 g de $Ca(OH)_2$.

Le produit final a une composition, en poids, de:

| $Al_2O_3$ | env. | 9,90% |
|---|---|---|
| Ca | env. | 1,06% |
| Na | env. | 3,21% |
| Cl | env. | 11,81% |
| $SO_4$ | env. | 1,22% |
| basicité | env. | 71,6% |

c'est-à-dire que le polychlorosulfate d'aluminium final a pour formule:

$$Al(OH)_{2,15}Cl_{1,71}(SO_4)_{0,07}Ca_{0,14}Na_{0,72}$$

EXEMPLE 5 (comparatif)

La procédure de l'exemple 4 est répétée, à l'exception du fait que la température de mélange des composés des métaux alcalino-terreux et alcalin est de 40°C.

Le produit final a une composition, en poids, de:

| $Al_2O_3$ | env. | 9,34% |
|---|---|---|
| Ca | env. | 0,93% |
| Na | env. | 3,40% |
| Cl | env. | 11,25% |
| $SO_4$ | env. | 1,12% |
| basicité | env. | 73,67% |

c'est-à-dire que le polychlorosulfate d'aluminium final a pour formule:

$$Al(OH)_{2,21}Cl_{1,73}(SO_4)_{0,065}Ca_{0,13}Na_{0,81}$$

EXEMPLE 6

Le polychlorosulfate d'aluminium de départ est obtenu comme décrit dans l'exemple 1 à l'exception du fait que le sulfate basique d'aluminium est remplacé par l'acide sulfurique à 60% qui est ajouté à une température comprise entre 50°C et 120°C.

Le polychlorosulfate d'aluminium obtenu a pour formule:

$$Al(OH)_{1,12}Cl_{1,76}(SO_4)_{0,06}$$

La préparation du produit de l'invention est effectuée à partir de 1 kg du polychlorosulfate d'aluminium préparé précédemment avec une teneur en alumine de 9%. La procédure de l'exemple 1 est répétée sauf qu'on ajoute 17 g de $Ca(OH)_2$ au lieu de 20 g et 62 g de $Na_2CO_3$ au lieu de 85 g.

Le produit final a une composition, en poids, de:

| | | |
|---|---|---|
| $Al_2O_3$ | env. | 8,43% |
| Ca | env. | 0,88% |
| Na | env. | 2,49% |
| Cl | env. | 10,34% |
| $SO_4$ | env. | 0,92% |
| basicité | env. | 68% |

c'est-à-dire que le polychlorosulfate d'aluminium final a pour formule:

$$Al(OH)_{2,03}Cl_{1,76}(SO_4)_{0,06}Ca_{0,13}Na_{0,65}$$

EXEMPLE 7 (témoin)

Le polychlorosulfate d'aluminium utilisé dans cet exemple est un produit préparé selon le procédé de la préparation 2 du brevet FR 2 036 685. Il a la composition suivante en poids:

| | | |
|---|---|---|
| $Al_2O_3$ | env. | 10,2% |
| Ca | env. | 0,47% |
| Cl | env. | 9,10% |
| $SO_4$ | env. | 2,30% |
| basicité | env. | 53,35% |

Sa formule est:

$$Al(OH)_{1,6}Cl_{1,28}(SO_4)_{0,12}Ca_{0,06}$$

Les tests d'application ont été effectués sur ces produits et ont donné les résultats consignés dans le tableau.

L'élimination de la turbidité (NTU résiduel) est représentatif de la qualité de la floculation. ce test est mis en oeuvre avec l'eau de la Seine à pH 8,50 à 8,69, à 21°C. Les résultats sont donnés comme le pourcentage d'amélioration par rapport au témoin (*).

Les teneurs résiduelles en aluminium sont exprimées en ppb ($\mu$g/l) comme le pourcentage d'amélioration par rapport au témoin (*).

La stabilité est estimée visuellement.

| Exemple n° | Basicité | Elimination de turbidité * (NTU résiduel) | Al résiduel * | Stabilité |
|---|---|---|---|---|
| 1 | 74,38 | -24% | -41% | 1 mois à 45°C |
| 2 | 73,04 | 0 | -71% | 1 mois à 45°C |
| 3 | 60,7 | +51,5% | -27,5% | 1 jour |
| 4 | 74,6 | + 7% | -40% | 1 mois à 45°C |
| 5 | 73,67 | +54% | -20% | gélification |
| 6 | 68,0 | -32% | -45% | 1 mois à 45°C |
| 7 | 53,35 | 0 | 0 | 1 mois à 45°C |

Les résultats montrent que les produits préparés dans les exemples 3 et 5, qui ne font pas partie de l'invention par suite d'une basicité trop faible (exemple 3 - 65%) ou une température de réaction trop basse (exemple 5 - 40°C), sont beaucoup moins efficaces en propriétés d'application mentionnées dans le tableau et moins stables.

EXEMPLE 8

On prépare un polychlorosulfate d'aluminium comme suit. On fait réagir de l'acide sulfurique sur du chlorure basique d'aluminium tel qu'obtenu à l'exemple 1, étape a), à une température comprise entre 60 et 120°C, afin d'obtenir un polychlorosulfate de départ approprié. Celui-ci est traité de façon similaire à l'exemple 1, étape b).
Sa composition finale est, en poids:

| | | |
|---|---|---|
| $Al_2O_3$ | env. | 7,73% |
| Ca | env. | 0,8% |
| Na | env. | 2,23% |
| Cl | env. | 9,4% |
| $SO_4$ | env. | 0,86% |
| basicité | env. | 67,7% |

c'est-à-dire que le polychlorosulfate d'aluminium final a pour formule:

$$Al(OH)_{1,78}Cl_{1,39}(SO_4)_{0,04}Ca_{0,10}Na_{0,51}$$

Ce sel d'Al est dénommé S 23.

EXEMPLES 9, 10 et 11

La procédure de l'exemple 1 est répétée et, en ajustant les quantités des constituants de départ, on obtient les polychlorosulfates d'aluminium suivants, désignés par leur référence:

-    ZPC 19C

    .    composition finale en poids:

| | | |
|---|---|---|
| $Al_2O_3$ | env. | 10,3% |
| Ca | env. | 1,05% |
| Na | env. | 3,45% |
| Cl | env. | 12% |
| $SO_4$ | env. | 1,19% |
| basicité | env. | 74,5% |

. formule:

$$Al(OH)_{2,37}Cl_{1,78}(SO_4)_{0,06}Ca_{0,13}Na_{0,79}$$

- ZPC 20B

  . composition finale en poids:

| | | |
|---|---|---|
| $Al_2O_3$ | env. | 9,02% |
| Ca | env. | 0,96% |
| Na | env. | 3,05% |
| Cl | env. | 10% |
| $SO_4$ | env. | 1,04% |
| basicité | env. | 75,3% |

. formule:

$$Al(OH)_{2,07}Cl_{1,48}(SO_4)_{0,05}Ca_{0,12}Na_{0,70}$$

- ZPC 21C

  . composition finale en poids:

| | | |
|---|---|---|
| $Al_2O_3$ | env. | 10,1% |
| Ca | env. | 1,07% |
| Na | env. | 3,35% |
| Cl | env. | 12% |
| $SO_4$ | env. | 1,21% |
| basicité | env. | 73,7% |

. formule:

$$Al(OH)_{2,32}Cl_{1,78}(SO_4)_{0,06}Ca_{0,13}Na_{0,77}$$

On met en oeuvre un dosage de l'aluminium sous forme $Al_{13}$. Les mesures sont effectuées par RMN de l'$Al^{27}$, à savoir recherche des paramètres d'acquisition et détermination du pulse 90°. Les conditions opératoires sont les sui-

vantes:

. Solution de référence    $AlCl_3$ 0,5M
. tuning 9966,5    accord de sonde
. matching 970    accord de sonde
. SF 52,147 MHz    fréquence de résonance d'Al
. SW = 15625 Hz    gamme de fréquence observée correspondant à la gamme 150 à -150 ppm par rapport à $AlCl_3$ (0 ppm)
. QI = 1361 Hz    porteuse en fréquence
. SI = TD = 8K    taille des FID et spectres (en Kmots)
. QN = AP    type de détection
. PW = 11 μs    durée de l'impulsion (PW 90° = 13)
. RD = 1 s    délai interimpulsions

Les résultats sont consignés dans le tableau ci-après.

EXEMPLE 12 (comparatif)

Le produit de cet exemple est un produit du commerce, le WAC HB[®] PB (commercialisé par la Société Elf Atochem S.A.). Sa composition en poids est la suivante:

| | | |
|---|---|---|
| $Al_2O_3$ | env. | 8,48% |
| Ca | env. | 1,2% |
| Na | env. | 0,013% |
| Cl | env. | 6,1% |
| $SO_4$ | env. | 1,44% |
| basicité | env. | 71,7% |

Ce produit est le produit qui a fait l'objet d'un test, tel que rapporté dans l'article de Pouillot et al., p. 20-21. Dans cet article, il est mentionné l'apparition d'aluminium sous forme $Al_{13}$ pour une dilution très importante du WAC HB, c'est-à-dire une concentration en Al faible. Cet article fait le lien entre l'apparition d'$Al_{13}$ et les propriétés intéressantes du produit. Ce produit WAC HB[®] présente une teneur en $Al_{13}$ de 3,4% en mole pour une concentration en Al de 0,012M, après un vieillissement de 8 jours. Cependant, pour une concentration en aluminium de 0,01M et sans vieillissement, on ne détecte aucune trace d'aluminium sous forme $Al_{13}$. Par ailleurs, à la concentration de 0,06M, on ne détecte non plus de trace d'aluminium sous forme $Al_{13}$.

| Proportion molaire en Al sous forme Al13 en fonction du taux de dilution | | | | | | |
|---|---|---|---|---|---|---|
| Ex. | Produit | Tel quel 1,5M Al | Dilution 1/5 0,3M Al | Dilution 1/10 0,15M Al | Dilution 1/25 0,06M Al | Dilution 1/125 0,012M Al |
| 8 | S23 (1 mois*) | N.D. | N.D. | < 1% | 1,4% | 3,2% |
| 8 | S23 (6 mois*) | N.D. | < 1% | 1,7% | 1,6% | 3,2% |
| 9 | ZPC 19C | N.D. | < 1% | N.A. | 2,2% | N.A. |
| 10 | ZPC 20B | N.D. | < 1% | 1,1% | 3,1% | 3% |
| 11 | ZPC 21C | N.D. | N.A. | N.A. | 1,2% | N.A. |
| N.A. = non analysé<br>N.D. = non déterminé | | | | | | |

\* = temps de vieillissement

**Revendications**

1. Polychlorosulfate d'aluminium à haute basicité, soluble dans l'eau, présentant au moins 1% en mole d'aluminium sous forme $Al_{13}$, pour une concentration en Al de 0,01M, et présentant la formule:

$$Al(OH)_a Cl_b (SO_4)_c M_d N_e$$

dans laquelle:

M       représente un métal alcalino-terreux;
N       représente un métal alcalin;
a, b, c, d et e   sont des nombres tels que:
        $1,95 < a < 2,4$; $0 < c < 0,15$; $0 < d < 0,16$;
        $0 < e < 1,7$; $a + b + 2c = 3 + 2d + e$ .

2. Polychlorosulfate d'aluminium selon la revendication 1, dans lequel M est le calcium.

3. Polychlorosulfate d'aluminium selon la revendication 1 ou 2, dans lequel N est le sodium.

4. Polychlorosulfate d'aluminium selon l'une quelconque des revendications 1 à 3, dans lequel:
    $2,05 < a < 2,25$; $0,04 < c < 0,06$; $0,1 < d < 0,13$;
    $0,4 < e < 0,8$.

5. Polychlorosulfate d'aluminium selon l'une quelconque des revendications 1 à 4, présentant une basicité supérieure à 67%, de préférence supérieure à 72%.

6. Polychlorosulfate d'aluminium selon l'une quelconque des revendications 1 à 5, présentant au moins 1% en mole d'aluminium sous forme $Al_{13}$ pour une concentration en Al de 0,06M et/ou au moins 3% en mole d'aluminium sous forme $Al_{13}$ pour une concentration en Al de 0,01M.

7. Procédé de préparation d'un polychlorosulfate d'aluminium à haute basicité, soluble dans l'eau, présentant au moins 1% en mole d'aluminium sous forme $Al_{13}$, pour une concentration en Al de 0,01M, et présentant la formule:

$$Al(OH)_a Cl_b (SO_4)_c M_d N_e$$

dans laquelle:

M       représente un métal alcalino-terreux;
N       représente un métal alcalin;
a, b, c, d et e   sont des nombres tels que:
        $1,95 < a < 2,4$; $0 < c < 0,15$; $0 < d < 0,16$;
        $0 < e < 1,7$; $a + b + 2c = 3 + 2d + e$ ;

comprenant la réaction, à une température de 50 à 70°C, d'un composé d'un métal alcalino-terreux M, d'un composé d'un métal alcalin N avec un polychlorosulfate d'aluminium de formule:

$$Al(OH)_{a'} Cl_{b'} (SO_4)_{c'}$$

dans laquelle:
    $1 < a' < 1,95$; $0 < c' < 0,15$;
    $a' + b' + 2c' = 3$ ;
en les proportions suivantes, calculées en équivalents moléculaires:

$$0 < M/Al < 0,16 \text{ et } 0 < N/Al < 1,7$$

8. Procédé selon la revendication 7, dans lequel la température est comprise entre 60 et 65°C.

9. Procédé selon la revendication 7 ou 8, dans lequel le composé de métal alcalino-terreux est un composé de calcium, de préférence $Ca(OH)_2$ et/ou $CaCO_3$.

**10.** Procédé selon l'une quelconque des revendications 7 à 9, dans lequel le métal alcalin est un composé de sodium, de préférence $Na_2CO_3$.

**11.** Procédé selon l'une quelconque des revendications 7 à 10, dans lequel: $1,1 < a' < 1,4$; $0,04 < c' < 0,06$; $0,1 < M/Al < 0,13$ et $0,4 < N/Al < 0,8$

**12.** Procédé selon l'une quelconque des revendications 7 à 11, dans lequel le polychlorosulfate d'aluminium de formule $Al(OH)_{a'}Cl_{b'}(SO_4)_{c'}$ est obtenu par le procédé consistant à faire réagir du chlorure basique d'aluminium sur du sulfate basique d'aluminium, portés préalablement à chaud, à une température comprise entre 80 et 120°C, les proportions relatives des constituants étant choisies de façon à obtenir le polychlorosulfate d'aluminium de formule $Al(OH)_{a'}Cl_{b'}(SO_4)_{c'}$ précitée.

**13.** Procédé selon l'une quelconque des revendications 7 à 11, dans lequel le polychlorosulfate d'aluminium de formule $Al(OH)_{a'}Cl_{b'}(SO_4)_{c'}$ est obtenu par le procédé consistant à faire réagir du chlorure basique d'aluminium avec l'acide sulfurique à une température comprise entre 60 et 120°C, les proportions relatives des constituants étant choisies de façon à obtenir le polychlorosulfate d'aluminium de formule $Al(OH)_{a'}Cl_{b'}(SO_4)_{c'}$ précitée.

**14.** Application des polychlorosulfates d'aluminium selon l'une des revendications 1 à 6, et notamment au traitement des eaux potables et effluents aqueux et dans l'industrie papetière.

**Claims**

**1.** High basicity water-soluble polyaluminumchlorosulfate, having a content of aluminum as $Al_{13}$ of at least 1 mol%, the aluminum concentration being 0.01M, and having the formula:

$$Al(OH)_aCl_b(SO_4)_cM_dN_e$$

in which:

M          is an alkaline-earth metal;
N          is an alkaline metal;
a, b, c, d and e          are numbers such that:
         $1.95 < a < 2.4$; $0 < c < 0.15$; $0 < d < 0.16$; $0 < e < 1.7$; $a + b + 2c = 3 + 2d + e$.

**2.** Polyaluminumchlorosulfate according to claim 1, in which M is calcium.

**3.** Polyaluminumchlorosulfate according to claim 1, in which N is sodium.

**4.** Polyaluminumchlorosulfate according to one of claims 1 to 3, in which:
         $2.05 < a < 2.25$; $0.04 < c < 0.06$; $0.1 < d < 0.13$; $0.4 < e < 0.8$.

**5.** Polyaluminumchlorosulfate according to one of claims 1 to 4, having a basicity higher than 67%, preferably higher than 72%.

**6.** Polyaluminumchlorosulfate according to one of claims 1 to 5, having a content of aluminum as $Al_{13}$ higher than 1 mol% for an Al concentration of 0.06M and/or an Al content as $Al_{13}$ higher than 3 mol% for an Al concentration of 0.01M.

**7.** A process for preparing a high basicity water-soluble polyaluminumchlorosulfate, having an aluminum content as $Al_{13}$ of at least 1 mol%, the aluminum concentration being 0.01M, and having the formula:

$$Al(OH)_aCl_b(SO_4)_cM_dN_e$$

in which:

M          is an alkaline-earth metal;
N          is an alkaline metal;
a, b, c, d and e          are numbers such that:
         $1.95 < a < 2.4$; $0 < c < 0.15$; $0 < d < 0.16$; $0 < e < 1.7$; $a + b + 2c = 3 + 2d + e$;

comprising reacting, at a temperature of 50 to 70 °C an alkaline-earth metal compound M and an alkaline metal compound N with an polyaluminumchlorosulfate of formula:

$$Al(OH)_{a'} \cdot Cl_{b'} \cdot (SO_4)_{c'}$$

in which:
$1 < a' < 1.95; 0 < c' < 0.15;$
$a' + b' + 2 c' = 3 ;$
in the following proportion, calculated in molecular equivalents:

$$0 < M/Al < 0.16 \text{ and } 0 < N/Al < 1.7.$$

8. The process according to claim 7, in which the temperature is comprised between 60 and 65°C.

9. The process according to claim 7 or 8, in which the alkaline-earth metal compound is a calcium compound, preferably $Ca(OH)_2$ and/or $CaCO_3$.

10. The process according to any one of claims 7 to 9, in which the alkaline metal is a sodium compound, preferably $Na_2CO_3$.

11. The process according to any one of claims 7 to 10, in which:
$1.1 < a' < 1.4; 0.04 < c' < 0.06;$ and $0.1 < M/Al < 0.13$ and $0.4 < N/Al < 0.8.$

12. The process according to any one of claims 7 to 11, in which the polyaluminumchlorosulfate of formula $Al(OH)_{a'} \cdot Cl_{b'} \cdot (SO_4)_{c'}$ is obtained by the process that comprises reacting basic aluminum chloride with basic aluminium sulfate, both previously heated, at a temperature comprised between 80 and 120°C, the relative proportions of the constituents being chosen whereby polyaluminumchlorosulfate of the abovementioned formula $Al(OH)_{a'} \cdot Cl_{b'} \cdot (SO_4)_{c'}$ is obtained.

13. The process according to one of claims 7 to 11, in which the polyaluminumchlorosulfate of formula $Al(OH)_{a'} \cdot Cl_{b'} \cdot (SO_4)_{c'}$ is obtained by the process that comprises reacting basic aluminum chloride with sulfuric acid at a temperature comprised between 60 and 120°C, the relative proportions of the constituents being chosen whereby polyaluminumchlorosulfate of the formula $Al(OH)_{a'} \cdot Cl_{b'} \cdot (SO_4)_{c'}$ above is obtained.

14. Application of the polyaluminumchlorosulfates according to one of claims 1 to 6, and notably to the treatment of water intended for drinking and aqueous effluents, and in the papermaking industry.

**Patentansprüche**

1. Wasserlösliches Aluminiumpolychlorosulfat mit hoher Basizität, enthaltend mindestens 1 Mol-% Aluminium in Form von $Al_{13}$ bei einer Al-Konzentration von 0,01 M, mit der Formel

$$Al(OH)_a Cl_b (SO_4)_c M_d N_e$$

in der

| M | ein Erdalkalimetall darstellt; |
|---|---|
| N | ein Alkalimetall darstellt; |
| a, b, c, d und e | Zahlen mit den folgenden Wertebereichen sind: |

$1,95 < a < 2,4; 0 < c < 0,15; 0 < d < 0,16;$
$0 < e < 1,7; a + b + 2c = 3 + 2d + e .$

2. Aluminiumpolychlorosulfat nach Anspruch 1, bei dem M Calcium ist.

3. Aluminiumpolychlorosulfat nach Anspruch 1 oder 2, bei dem N Natrium ist.

4. Aluminiumpolychlorosulfat nach einem der Ansprüche 1 bis 3, bei dem:
$2,05 < a < 2,25; 0,04 < c < 0,06; 0,1 < d < 0,13;$
$0,4 < e < 0,8.$

5. Aluminiumpolychlorosulfat nach einem der Ansprüche 1 bis 4 mit einer Basizität von mehr als 67 %, vorzugsweise von mehr als 72 %.

6. Aluminiumpolychlorosulfat nach einem der Ansprüche 1 bis 5 mit mindestens 1 Mol-% Aluminium in Form von $Al_{13}$ bei einer Al-Konzentration von 0,06 M und/oder mindestens 3 Mol-% Aluminium in Form von $Al_{13}$ bei einer Al-Konzentration von 0,01 M.

7. Verfahren zur Herstellung eines wasserlöslichen Aluminiumpolychlorosulfats mit hoher Basizität, das mindestens 1 Mol-% Aluminium in Form von $Al_{13}$ bei einer Al-Konzentration von 0,01 M enthält und die folgende Formel hat:

$$Al(OH)_a Cl_b (SO_4)_c M_d N_e$$

in der

| | |
|---|---|
| M | ein Erdalkalimetall darstellt; |
| N | ein Alkalimetall darstellt; |
| a, b, c, d und e | Zahlen mit den folgenden Wertebereichen sind: |
| | $1{,}95 < a < 2{,}4$; $0 < c < 0{,}15$; $0 < d < 0{,}16$; |
| | $0 < e < 1{,}7$; $a + b + 2c = 3 + 2d + e$ ; |

wobei man bei einer Temperatur von 50 bis 70 °C eine Verbindung eines Erdalkalimetalls M und eine Verbindung eines Alkalimetalls N mit einem Aluminiumpolychlorosulfat reagieren läßt, das die folgende Formel aufweist:

$$Al(OH)_{a'} Cl_{b'} (SO_4)_{c'}$$

in der
   $1 < a' < 1{,}95$; $0 < c' < 0{,}15$;
   $a' + b' + 2c' = 3$ ;
mit den folgenden Mengen, berechnet als Moläquivalente:

$$0 < M/Al < 0{,}16 \text{ und } 0 < N/Al < 1{,}7.$$

8. Verfahren nach Anspruch 7, bei dem die Temperatur zwischen 60 und 65 °C liegt.

9. Verfahren nach Anspruch 7 oder 8, bei dem die Erdalkalimetallverbindung eine Calciumverbindung ist, vorzugsweise $Ca(OH)_2$ und/oder $CaCO_3$.

10. Verfahren nach einem der Ansprüche 7 bis 9, bei dem die Alkalimetallverbindung eine Natriumverbindung ist, vorzugsweise $Na_2CO_3$.

11. Verfahren nach einem der Ansprüche 7 bis 10, bei dem:
   $1{,}1 < a' < 1{,}4$; $0{,}04 < c' < 0{,}06$;
   $0{,}1 < M/Al < 0{,}13$ und $0{,}4 < N/Al < 0{,}8$.

12. Verfahren nach einem der Ansprüche 7 bis 11, bei dem das Aluminiumpolychlorosulfat der Formel $Al(OH)_{a'} Cl_{b'} (SO_4)_{c'}$ durch ein Verfahren erhalten wird, bei dem man basisches Aluminiumchlorid auf basischem Aluminiumsulfat, die man zuvor erwärmt hat, bei einer Temperatur zwischen 80 und 120 °C reagieren läßt, wobei die relativen Mengenverhältnisse der Bestandteile so ausgewählt werden, daß man das Aluminiumpolychlorosulfat der zuvor genannten Formel $Al(OH)_{a'} Cl_{b'} (SO_4)_{c'}$ erhält.

13. Verfahren nach einem der Ansprüche 7 bis 11, bei dem das Aluminiumpolychlorosulfat der Formel $Al(OH)_{a'} Cl_{b'} (SO_4)_{c'}$ durch ein Verfahren erhalten wird, bei dem man bei einer Temperatur zwischen 60 und 120 °C basisches Aluminiumchlorid mit Schwefelsäure reagieren läßt, wobei die relativen Mengenverhältnisse der Bestandteile so ausgewählt werden, daß man das Aluminiumpolychlorosulfat der zuvor genannten Formel $Al(OH)_{a'} Cl_{b'} (SO_4)_{c'}$ erhält.

14. Verwendung der Aluminiumpolychlorosulfate nach einem der Ansprüche 1 bis 6, insbesondere zur Behandlung von Trinkwasser und Abwässern sowie in der Papierindustrie.